# EUROPEAN PATENT APPLICATION

(11) **EP 4 106 370 A1**
(43) Date of publication of application: **21.12.2022**
(21) Application number: 20918607.1
(22) Date of filing: 14.02.2020
(51) Int. Cl.: H04W 8/24, H04W 16/28

(54) **TERMINAL, RADIO COMMUNICATION METHOD, AND BASE STATION**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP); RUPASINGHE, Nadisanka, Palo Alto, California 94304 (US)
(74) Representative: Hoffmann Eitle
(86) International application number: PCT/JP2020/005911
(87) International publication number: WO 2021/161541

(57) **Abstract**

A terminal according to one aspect of the present disclosure includes a control section that judges, on the basis of whether to support antenna port switching between arbitrary antenna port pairs, correspondence between a bit of transmitted precoding matrix indicator (TPMI) group capability information and a TPMI group, and a transmitting section that transmits, on the basis of the correspondence, the TPMI group capability information corresponding to a TPMI group to support full power transmission. According to one aspect of the present disclosure, it is possible to appropriately control full power transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (also referred to as, for example, "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR, user terminal (User Equipment (UE)) capabilities related to codebook-based full power UL transmission using a plurality of power amplifiers (PAs) are under study. In discussions of the NR thus far, UE capability 1 to UE capability 3 have been proposed as follows:
- UE capability 1: a PA (full rated PA) that can output maximum rated power is supported (or included) in respective transmission chains (Tx chains),
- UE capability 2: none of the transmission chains support the full rated PA, and
- UE capability 3: a subset (part) of the transmission chains supports the full rated PA.

A UE to support UE capability 2 or UE capability 3 for which at least one of two modes (mode 1 and mode 2) is configured in relation to a full power transmission operation is under study. For Rel-16 NR, the UE that reports UE capability information indicating that mode 1 is supported, that reports UE capability information indicating that mode 2 is supported, and that reports UE capability information related to a TPMI set (which may be referred to as a TPMI group) capable of performing full power transmission in relation to mode 2 is under study.

However, a study of what kind of TPMI group to be reported by the UE has not yet proceeded. Unless an appropriate TPMI group is reported, the UE fails to perform full power transmission appropriately. When the full power transmission is not available, coverage reduction and the like may occur, and an increase in communication throughput may be suppressed.

Thus, an object of the present disclosure is to provide a terminal, a radio communication method, and a base station that can appropriately control full power transmission.

### Solution to Problem

A terminal according to one aspect of the present disclosure includes a control section that judges, on the basis of whether to support antenna port switching between arbitrary antenna port pairs, correspondence between a bit of transmitted precoding matrix indicator (TPMI) group capability information and a TPMI group, and a transmitting section that transmits, on the basis of the correspondence, the TPMI group capability information corresponding to a TPMI group to support full power transmission.

### Advantageous Effects of Invention

According to one aspect of the present disclosure, it is possible to appropriately control full power transmission.

### Brief Description of Drawings

FIG. 1 is a diagram to show an example of an association between a precoder type and a TPMI index;
FIG. 2 is a diagram to show an example of UE structures assumed by UE capability 1 to UE capability 3 related to full power transmission;
FIGS. 3A and 3B are diagrams to show an example of a TPMI group;
FIG. 4 is a diagram to show an example of a TPMI group indicated by TPMI group capability information in a first embodiment;
FIG. 5 is a diagram to show an example of a PA architecture of a partial coherent UE corresponding to each group or combination of groups in the first embodiment;
FIG. 6 is a diagram to show an example of a PA architecture corresponding to a group or combination of groups to be reported in the first embodiment;
FIG. 7 is a diagram to show another example of the TPMI group indicated by TPMI group capability information in the first embodiment;
FIGS. 8A and 8B are diagrams to show an example of a port and PA architecture that is related to G7 and is capable of performing full power transmission;
FIG. 9 is a diagram to show an example of a TPMI group indicated by TPMI group capability information in a second embodiment;
FIG. 10 is a diagram to show an example of a PA architecture corresponding to a group or combination of groups to be reported in the second embodiment;
FIG. 11 is a diagram to show another example of the TPMI group indicated by TPMI group capability information in the second embodiment;
FIG. 12 is a diagram to show an example of a schematic structure of a radio communication system according to one embodiment;
FIG. 13 is a diagram to show an example of a structure of a base station according to one embodiment;
FIG. 14 is a diagram to show an example of a structure of a user terminal according to one embodiment; and
FIG. 15 is a diagram to show an example of a hardware structure of the base station and the user terminal according to one embodiment.

### Description of Embodiments

### (PUSCH Precoder)

For NR, a UE that supports at least one of codebook (CB)-based transmission and non-codebook (NCB)-based transmission is under study.

For example, the UE that judges a precoder (precoding matrix) for at least one of CB-based and NCB-based uplink shared channel (Physical Uplink Shared Channel (PUSCH)) transmission by using at least a sounding reference signal (SRS) resource index (SRI) is under study.

In a case of CB-based transmission, the UE may determine the precoder for PUSCH transmission on the basis of the SRI, a transmitted rank indicator (TRI), a transmitted precoding matrix indicator (TPMI), and the like. In a case of NCB-based transmission, the UE may determine the precoder for PUSCH transmission on the basis of the SRI.

The SRI, TRI, TPMI, and the like may be notified to the UE with use of downlink control information (DCI). The SRI may be designated by an SRS Resource Indicator field (SRI field) in the DCI, or may be designated by a parameter "srs-ResourceIndicator" included in an RRC information element "ConfiguredGrantConfig" for a configured grant PUSCH. The TRI and TPMI may be designated by a precoding information and number of layers field ("Precoding information and number of layers" field) in the DCI.

The UE may report UE capability information related to a precoder type, and a precoder type based on the UE capability information may be configured for the UE by higher layer signaling from a base station. The UE capability information may be precoder type information (which may be represented by an RRC parameter "pusch-TransCoherence") used by the UE for PUSCH transmission.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), or the like.

The UE may determine the precoder used for PUSCH transmission on the basis of precoder type information (which may be represented by an RRC parameter "codebookSubset") included in PUSCH configuration information ("PUSCH-Config" information element for RRC signaling) notified by the higher layer signaling. A subset of PMIs designated by the TPMI may be configured for the UE by the codebookSubset.

Note that the precoder type may be designated by any one or combinations of at least two of fully coherent (full coherent, coherent), partial coherent (partially coherent), and non-coherent (non coherent) (for example, the combination may be represented by a parameter such as "fully, partial, and non-coherent (fullyAndPartialAndNonCoherent)" and "partial and non-coherent (partialAndNonCoherent)").

The fully coherent may mean that all antenna ports used for transmission are synchronized (which may be expressed as phase matching is available, the precoder to be applied is the same, or the like). The partial coherent may mean that some ports of antenna ports used for transmission are synchronized with each other, but the some ports are not synchronized with another port. The non-coherent may mean that each antenna port used for transmission is not synchronized.

Note that the UE that supports the fully coherent precoder type may be assumed to support the partial coherent and non-coherent precoder type. The UE that supports the partial coherent precoder type may be assumed to support the non-coherent precoder type.

In the present disclosure, the precoder type may be interpreted as coherency, PUSCH transmission coherence, a coherent type, a coherence type, a codebook type, a codebook subset, a codebook subset type, and the like.

The UE may determine, on the basis of a plurality of precoders (which may be referred to as precoding matrices, codebooks, and so on) for CB-based transmission, a precoding matrix corresponding to a TPMI index obtained from DCI (for example, DCI format 0_1, hereinafter the same applies) to schedule UL transmission.

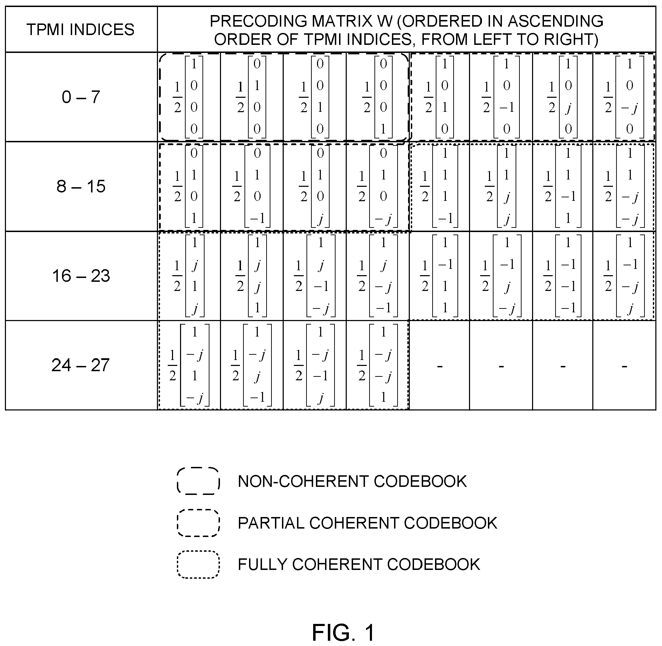

FIG. 1 is a diagram to show an example of an association between the precoder type and the TPMI index. FIG. 1 corresponds to a table for a precoding matrix W for single layer transmission using 4 antenna ports in DFT-s-OFDM (Discrete Fourier Transform spread OFDM, transform precoding is enabled).

In FIG. 1, when a precoder type (codebookSubset) is fully, partial, and non-coherent (fullyAndPartialAndNonCoherent), any one of TPMIs 0 to 27 is notified to the UE to single layer transmission. When the precoder type is partial and non-coherent (partialAndNonCoherent), any one of TPMIs 0 to 11 is configured for the UE to single layer transmission. When the precoder type is non-coherent (nonCoherent), any one of TPMIs 0 to 3 is configured for the UE to single layer transmission.

FIG. 1 is a table defined in Rel-15 NR. In this table, letting transmit power for fully coherent corresponding to indices 12 to 27 be 1 (= (1/2)² * 4), transmit power for partial coherent corresponding to indices 4 to 11 is 1/2 (= (1/2)² * 2), and transmit power for noncoherent corresponding to indices 0 to 3 is 1/4 (= (1/2)² * 1).

In other words, according to Rel-15 NR specifications, when the UE performs codebook-based transmission by using a plurality of ports, using a part of codebooks may lower transmit power as compared to the codebook-based transmission using a single port (full power transmission is not available).

Note that as shown in FIG. 1, a precoding matrix in which only one of elements of each column is not zero may be referred to as a noncoherent codebook. A precoding matrix in which only a certain number of elements of each column (except all of the elements) is not zero may be referred to as a partial coherent codebook. A precoding matrix in which none of elements of each column are zero may be referred to as a fully coherent codebook.

The non-coherent codebook and partial coherent codebook may be referred to as an antenna selection precoder. The fully coherent codebook may be referred to as a non-antenna selection precoder.

Note that in the present disclosure, the partial coherent codebook may correspond to a codebook obtained by removing a codebook corresponding to a TPMI designated for the UE for which a non-coherent codebook subset (e.g., an RRC parameter "codebookSubset" = "nonCoherent") is configured from codebooks (precoding matrices) corresponding to a TPMI designated by DCI for codebook-based transmission by the UE for which a partial coherent codebook subset (e.g., an RRC parameter "codebookSubset" = "partialAndNonCoherent") is configured (in other words, a codebook with TPMIs = 4 to 11 in a case of single layer transmission with 4 antenna ports).

Note that in the present disclosure, the fully coherent codebook may correspond to a codebook obtained by removing a codebook corresponding to a TPMI designated for the UE for which a partial coherent codebook subset (e.g., an RRC parameter "codebookSubset" = "partialAndNonCoherent") is configured from codebooks (precoding matrices) corresponding to a TPMI designated by DCI for codebook-based transmission by the UE for which a fully coherent codebook subset (e.g., an RRC parameter "codebookSubset" = "fullyAndPartialAndNonCoherent") is configured (in other words, a codebook with TPMIs = 12 to 27 in a case of single layer transmission with 4 antenna ports).

### (UE Capability for Full Power Transmission)

Performing full power UL transmission appropriately is preferable even when a codebook is used. Thus, for NR, UE capability related to codebook-based full power UL transmission using a plurality of power amplifiers (PAs) is under study. In discussions of the NR thus far, UE capability 1 to UE capability 3 have been proposed as follows:
- UE capability 1: a PA (full rated PA) that can output maximum rated power is supported (or included) in respective transmission chains (Tx chains),
- UE capability 2: none of the transmission chains support the full rated PA, and
- UE capability 3: a subset (part) of the transmission chains supports the full rated PA.

Note that the UE having at least one of UE capability 1 to UE capability 3 may mean that full power for UL transmission is supported. Apart from UE capability 1 to UE capability 3, the UE may report capability information indicating that UL full power transmission capability is supported to a network (e.g., the base station). Full power transmission to be supported may be configured for the UE from the network.

UE capability 1/2/3 may be interpreted as UE capability 1/2/3 related to full power transmission, full power transmission type 1/2/3, power allocation type 1/2/3, and so on, respectively. In the present disclosure, a type, a mode, a capability, and the like may be interchangeably interpreted. In the present disclosure, 1/2/3 may be interpreted as a set of arbitrary numbers or letters, such as A/B/C.

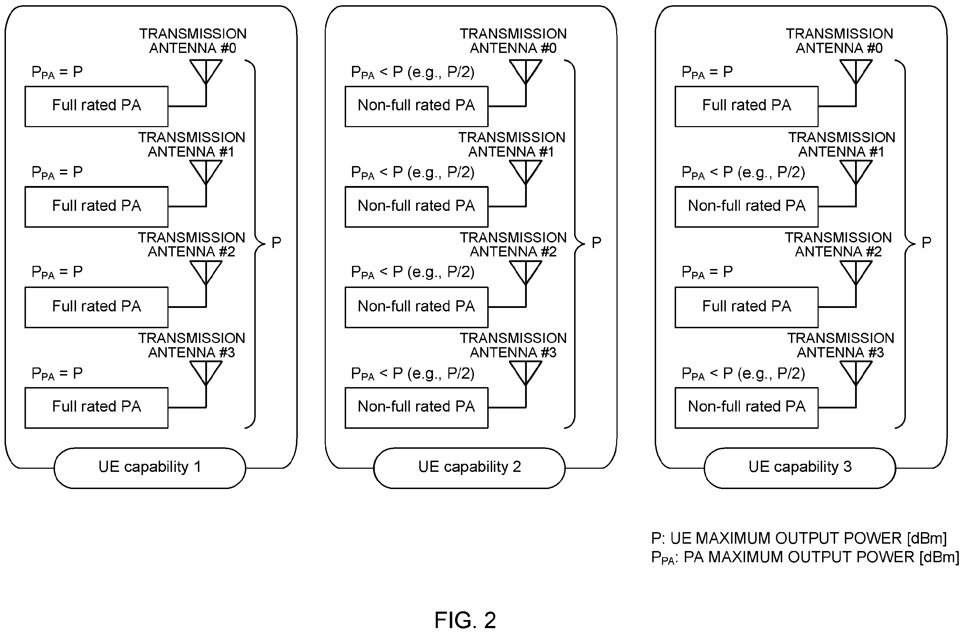

FIG. 2 is a diagram to show an example of UE structures assumed by UE capability 1 to UE capability 3 related to full power transmission. FIG. 2 briefly shows only PAs and transmission antenna ports (which may be interpreted as transmission antennas) as the UE structures. Note that FIG. 2 shows an example in which the number of the PAs and the number of the transmission antenna ports are both 4, but the present disclosure is not limited to this.

Note that P denotes UE maximum output power [dBm], and PPA denotes PA maximum output power [dBm]. Note that P may be, for example, 23 dBm in a power class 3 UE, and may be, for example, 26 dBm in a power class 2 UE. The present disclosure assumes PPA ≤ P, but embodiments according to the present disclosure may be employed in a case where PPA > P.

A structure for UE capability 1 is assumed to be higher cost in implementation, but the structure can perform full power transmission by using one or more arbitrary antenna ports. A structure for UE capability 2 includes only non-full rated PAs and is expected to be implementable at a lower cost. However, using only one antenna port does not enable full power transmission, and thus controlling of a phase, amplitude, and the like of a signal input into each PA is needed. Note that UE capability 1 may be referred to as mode 0.

A structure for UE capability 3 is in the middle of the structure for UE capability 1 and the structure for UE capability 2. Antenna ports (in the present example, transmission antennas #0 and #2) that can perform full power transmission coexist with antenna ports (in the present example, transmission antennas #1 and #3) that cannot perform full power transmission.

Note that indices, the number, and the like of the antenna ports of UE capability 3 that can perform full power transmission are not limited to this. The present example assumes non-full rated PA PPA = P/2, but a value of P_{PA} is not limited to this.

Incidentally, a UE to support UE capability 2 or UE capability 3 for which at least one of two modes (mode 1 and mode 2) is configured in relation to a full power transmission operation is under study. Modes 1 and 2 may be referred to as operation modes 1 and 2 or the like, respectively.

Here, mode 1 may be a mode (which may be referred to as, for example, a first full power transmission mode) in which the UE is configured so that one or a plurality of SRS resources included in one SRS resource set for "codebook" usage have the same number of SRS ports. The UE to operate in mode 1 may perform full power transmission by using all antenna ports.

The UE to operate in mode 1 may be configured from the network so that a TPMI subset to couple ports in 1 layer for achieving the full power transmission is used. A new codebook subset may be introduced only to a rank value that includes a TPMI precoder corresponding to "fullyAndPartialAndNonCoherent" defined in Rel-15 NR and that is not available for full power transmission.

On the other hand, mode 2 may be a mode (which may be referred to as, for example, a second full power transmission mode) in which the UE is configured so that one or a plurality of SRS resources included in one SRS resource set for "codebook" usage have different numbers of SRS ports. The UE to operate in mode 2 may perform full power transmission by using some antenna ports instead of using all antenna ports.

The UE to operate in mode 2 may transmit a PUSCH and SRS by using the same method regardless of whether antenna virtualization is used. In order to support SRS resources greater than 1 port, a TPMI set for achieving the full power transmission may be notified to the UE in mode 2. In a case of mode 2, 2 or 3 SRS resources may be configured per one SRS resource set (up to 2 in Rel-15 NR).

Compared to mode 2, mode 1 has an advantage in that a necessary size of an SRI field may be smaller (full power transmission with 1 SRS resource is possible).

Compared to mode 1, mode 2 has an advantage in that single port transmission and multi-port transmission can be dynamically switched by DCI. Full power transmission can be performed with a part of antenna ports, and thus, for example, full power transmission can be performed with use of only an antenna having a full rated PA and full power transmission can be performed with use of only a coherent antenna.

Note that the UE may determine, on the basis of higher layer signaling (for example, RRC signaling), physical layer signaling (for example, DCI), or a combination of these, a mode used for PUSCH transmission. In other words, the mode for the PUSCH transmission may be configured or indicated for the UE by UL full power transmission mode information (ULFPTxModes) in a higher layer parameter (for example, PUSCH configuration information (PUSCH-Config information element)).

For Rel-16 NR, the UE that reports UE capability information indicating that mode 1 is supported, that reports UE capability information indicating that mode 2 is supported, and that reports UE capability information (which may be referred to as, for example, TPMI group capability information) related to a TPMI set (which may be referred to as a TPMI group) capable of performing full power transmission in relation to mode 2 is under study.

For mode 2, use of a codebook and codebook subset for Rel-15 NR is under study.

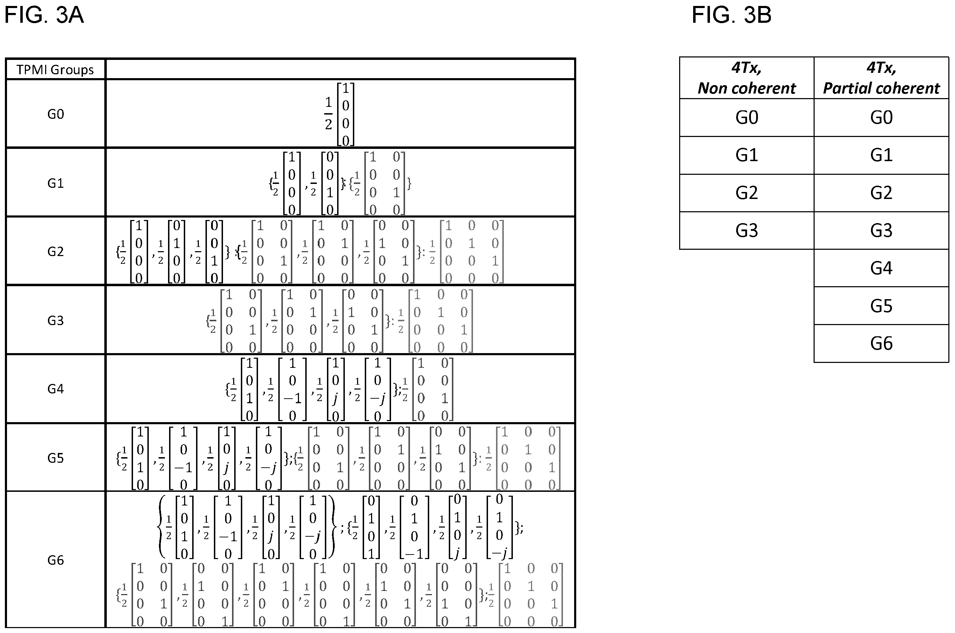

FIGS. 3A and 3B are diagrams to show an example of the TPMI group. FIG. 3A shows a precoding matrix (precoder) for each rank corresponding to the TPMI group in a case where the number of transmission antenna ports is 4. In the present example, a precoder capable of performing full power transmission in relation to a certain rank corresponds to one or more precoders in a range sectioned by at least one of a colon ":" and a semicolon ";." Note that when the precoder capable of performing full power transmission in relation to the certain rank has a plurality of precoders sandwiched by "{}," any one of the plurality of the precoders can perform the full power transmission in relation to the rank. The number of columns in each matrix may represent the number of layers.

FIG. 3B shows an example of the TPMI group assumed by the UE with 4 transmission antenna ports. In the present example, a non-coherent UE with 4 transmission antenna ports can correspond to any one of G0 to G3. A partial coherent UE with 4 transmission antenna ports can correspond to any one of G0 to G6.

When a codebook subset included in PUSCH configuration information is non-coherent or partial coherent (an RRC parameter "codebookSubset" = "nonCoherent" or "partialAndNonCoherent") and a parameter ("ULFPTx") indicating full power transmission is included in the PUSCH configuration information, the UE may scale (for example, multiply or divide) a linear value of PUSCH transmit power determined on the basis of a pathloss or the like by a certain factor s. The factor may be referred to as a power scaling factor.

For example, when the UL full power transmission mode information (ULFPTxModes) = mode 1 is configured and each SRS resource of the SRS resource set for codebook usage has more than one SRS port, the UE may derive s = (the number of non-zero PUSCH antenna ports/a maximum number of SRS ports supported by the UE in one SRS resource).

Here, the non-zero PUSCH antenna ports may mean antenna ports having non-zero PUSCH transmit power, and may mean antenna ports with a value not being zero (for example, 1 or j) out of antenna ports for which transmission is indicated by the precoding matrix (codebook subset).

The UE for which the UL full power transmission mode information (ULFPTxModes) = mode 2 is configured (also referred to as a mode 2 UE) may apply s = 1 to a TPMI precoder reported as the above-described TPMI group.

With respect to a TPMI precoder other than the TPMI precoder reported as the above-described TPMI group, the mode 2 UE may derive s = (the number of non-zero PUSCH antenna ports/the number of SRS ports). Here, the number of the SRS ports may, when only one SRS resource is configured for the SRS resource set for codebook usage, be the number of SRS ports related to the SRS resource, and may, when more than one SRS resource is configured for the SRS resource set for codebook usage, correspond to the number of SRS ports for SRS resources indicated by the SRI.

The UE may equally divide a value to which the above-described linear value of the PUSCH transmit power is scaled with use of the above-described factor s through the non-zero PUSCH antenna ports. The UE may perform full power transmission of the PUSCH by applying the determined (or assumed) factor s to the precoding matrix. In other words, the UE may perform full power transmission of the PUSCH by using a matrix multiplied by the above-described s (or √s) for a matrix part of the precoding matrix.

As mentioned above, mode 2 requires the UE to report the TPMI group to support UL full power transmission. However, a study of what kind of TPMI group to be reported by the UE (for example, whether only the above-mentioned G0 to G6 are adequate) has not yet proceeded. Unless an appropriate TPMI group is reported, the UE fails to perform full power transmission appropriately. When the full power transmission is not available, coverage reduction and the like may occur, and an increase in communication throughput may be suppressed.

Thus, the inventors of the present invention analyzed PA architectures corresponding to UE capabilities, and came up with the idea of a set of groups suitable for the report. According to one aspect of the present disclosure, for example, it is possible to use TPMI group capability information capable of applying all PA architectures of a partial coherent UE with UE capability 3. The number of TPMI groups (or combinations of groups) to be reported can be reduced, thereby allowing efficient use of capability information. The UE can perform UL MIMO (Multi Input Multi Output) transmission at full power, and cell coverage similar to that of a single antenna can be maintained. According to UL MIMO, it is possible to obtain spatial diversity gain, and throughput improvement can be expected.

Embodiments according to the present disclosure will be described in detail with reference to the drawings as follows. The radio communication methods according to respective embodiments may each be employed individually, or may be employed in combination.

Note that the terms "antenna" and "antenna port" in embodiments below may be interchangeably interpreted.

In the present disclosure, "full power" may be interpreted as "power boosting," "maximum power," "enhanced power," "higher power as compared to that of Rel-15 UE," and the like.

In the present disclosure, having UE capability X (X = 1, 2, and 3), reporting the UE capability X, having capability to perform full power transmission by using a structure for the UE capability X, and so on may be interchangeably interpreted.

In the present disclosure, having capability related to coherent (e.g., fully coherent, partial coherent, and non-coherent), reporting the capability, having configured the coherence, and so on may be interchangeably interpreted.

A non-coherent UE, a partial coherent UE, and a fully coherent UE may be interchangeably interpreted as a UE having capability related to non-coherence, a UE having capability related to partial coherence, and a UE having a capability related to fully coherent, respectively.

A non-coherent UE, a partial coherent UE, and a fully coherent UE may mean a UE for which "non-coherent (nonCoherent)," "partial and noncoherent (partialAndNonCoherent)," and "fully, partial, and non-coherent (fullyAndPartialAndNonCoherent)" codebook subset is configured by a higher layer, respectively. Note that in the present disclosure, a codebook subset and a codebook may be interchangeably interpreted.

A non-coherent UE, a partial coherent UE, and a fully coherent UE may mean a UE that can perform transmission using a non-coherent codebook, a partial coherent codebook, and a fully coherent codebook, respectively.

In respective embodiments below, mode 1 or mode 2 will be described as being related to an SRS resource set for codebook usage, but the present disclosure is not limited to this. Mode 1 or mode 2 of each embodiment may be interpreted as, for example, mode 1 or mode 2 related to an SRS resource set for non-codebook usage.

Note that in the present disclosure, "TPMI = matrix with X," "TPMI = X," and "TPMI index = X" may be interchangeably interpreted. The noncoherent codebook and partial coherent codebook may be referred to as an antenna selection precoder. The fully coherent codebook may be referred to as a non-antenna selection precoder. A TPMI corresponding to the antenna selection precoder may be referred to as an antenna selection TPMI. A TPMI corresponding to the non-antenna selection precoder may be referred to as a non-antenna selection TPMI.

In the present disclosure, a "TPMI precoder," a "TPMI group," "one or more TPMIs," a "TPMI group to activate full power," a "TPMI group to support full power," and the like may be interchangeably interpreted.

In the present disclosure, "support ...," "report that a capability for ... is provided to the network," and the like may be interchangeably interpreted.

In the present disclosure, capability information indicating that mode X (X is an integer, for example, X = 0, 1, or 2) is supported may be referred to as mode X capability information. "Capability information" in the present disclosure may be simply interpreted as "information."

Assume a "UE" of embodiments below as a UE having UE capability 3, but the present disclosure is not limited to this. For example, the UE may be a UE having UE capability 2. In the embodiments below, an example with 4 transmission antenna ports will be described, but the number of the transmission antenna ports may be interpreted as another number.

### (Radio Communication Method)

### <First Embodiment>

A first embodiment relates to TPMI group capability information for a partial coherent UE that supports mode 2 and that has 4 transmission antenna ports (4Tx).

The UE of the first embodiment has two coherent port pairs. One may be a pair of port 0 and port 2, and the other may be a pair of port 1 and port 3. Note that port 0, port 1, port 2, and port 3 are just port numbers for convenience, and may each correspond to an arbitrary port number. The coherent port pairs, coherent subsets, coherent port sets, and the like may be interchangeably interpreted.

It may be assumed that ports included in a certain coherent port pair are coherent with each other. It may be assumed that ports included in a certain coherent port pair are not coherent with ports included in another coherent port pair.

The UE in the first embodiment can perform antenna port switching between arbitrary port pairs regardless of the coherent port pairs. For example, the UE can switch port 0 for any one of port 0, port 1, port 2, and port 3. The UE may report capability information indicating that the antenna port switching between arbitrary port pairs is supported to a network.

The UE may assume that the TPMI group capability information indicates any one of groups (G0 to G6) discussed thus far in relation to Rel-16 NR or a combination of these.

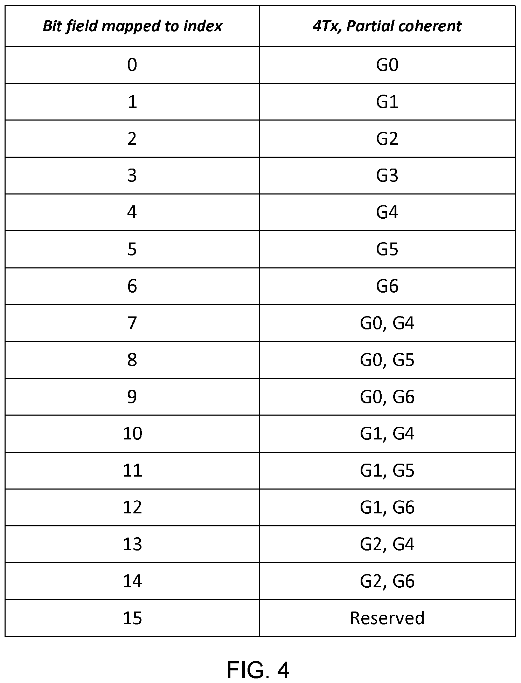

FIG. 4 is a diagram to show an example of a TPMI group indicated by the TPMI group capability information in the first embodiment. The present example shows correspondence between a value of 4-bit TPMI group capability information ("Bit field mapped to index" of FIG. 4) and a corresponding group, the correspondence being possibly reported by the partial coherent UE having the 4 transmission antenna ports (4Tx).

In FIG. 4, bit field values 0 to 6 each corresponds to one group (G0 to G6). On the other hand, bit field values 7 to 14 each corresponds to a combination of two groups. Note that "Reserved" is defined for a bit field value 15, but the present disclosure is not limited to this.

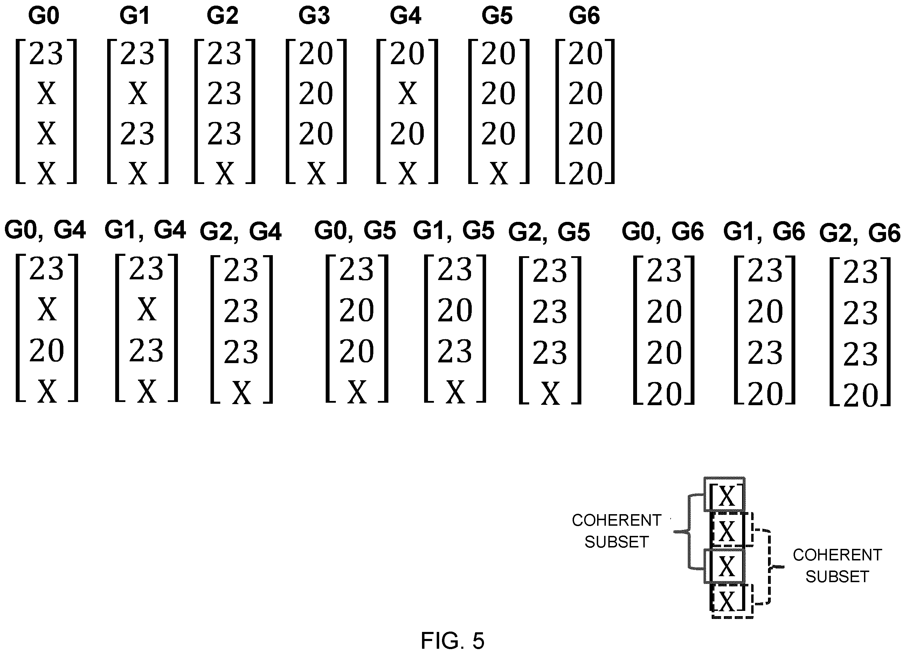

FIG. 5 is a diagram to show an example of a PA architecture of the partial coherent UE corresponding to each group or combination of groups in the first embodiment. The present example shows, with respect to each example, PA maximum output power corresponding to antenna port 0, antenna port 1, antenna port 2, and antenna port 3 from top to bottom. Note that antenna port 0 and antenna port 2 may correspond to a coherent subset (for example, panels having a coherent relationship with each other). Antenna port 1 and antenna port 3 may correspond to another coherent subset.

G0 to G6 each indicates a PA architecture as follows.
- G0: 23 dBm for port 0,
- G1: 23 dBm for port 0 and port 2,
- G2: 23 dBm for port 0, port 1, and port 2,
- G3: 20 dBm for port 0, port 1, and port 2,
- G4: 20 dBm for port 0 and port 2,
- G5: 20 dBm for port 0, port 1, and port 2, and
- G6: 20 dBm for port 0, port 1, port 2, and port 3.

Note that "X" in FIG. 5 may mean that a port is not assumed to be for a combination of ports for full power transmission, or may mean that a port has a lower value (for example, 0) than another value in the same matrix. The UE may apply full power transmission by using a port without "X" in a certain matrix. G3 and G5 may indicate the same PA architecture (applicable ranks are different from each other). "X" and "17" may be interchangeably interpreted.

For G0 to G2, the UE may assume that a port corresponding to "23" can perform full power transmission individually. For G3 to G6, the UE may assume that full power transmission can be performed with use of two or more ports corresponding to "20."

Note that when the partial coherent UE has reported only G1, the UE may assume that full power transmission using both port 0 and port 2 for single layer transmission is not supported.

For G1, the UE may assume 23 dBm for port 0 and port 2 that are coherent with each other, or may assume 23 dBm for port 0 and port 1 that are non-coherent with each other. According to such an assumption, G1 and G4 defined all the way separately are effective.

For the UE that has reported only G3, the UE may assume that single layer full power transmission is not supported. According to such an assumption, G3 and G5 defined all the way separately are effective.

A plurality of combinations of groups each indicates a PA architecture as follows.
- G0 and G4: 23 dBm for port 0 and 20 dBm for port 2,
- G1 and G4: 23 dBm for port 0 and port 2,
- G2 and G4: 23 dBm for port 0, port 1, and port 2,
- G0 and G5: 23 dBm for port 0 and 20 dBm for port 1 and port 2,
- G1 and G5: 23 dBm for port 0 and port 2 and 20 dBm for port 1,
- G2 and G5: 23 dBm for port 0, port 1, and port 2,
- G0 and G6: 23 dBm for port 0 and 20 dBm for port 1, port 2, and port 3,
- G1 and G6: 23 dBm for port 0 and port 2 and 20 dBm for port 1 and port 3, and
- G2 and G6: 23 dBm for port 0, port 1, and port 2 and 20 dBm for port 1.

At first glance, a combination of G1 and G4 looks the same as G1, but as mentioned above, 23 dBm for port 0 and port 1 that are noncoherent with each other may be assumed for only G1, and 23 dBm for port 0 and port 2 that are coherent with each other may be assumed for the combination of G1 and G4. According to such an assumption, the combination of G1 and G4 and G1 (or G4) defined all the way separately are effective.

A combination of G2 and G4 and a combination of G2 and G5 indicate the same PA architecture. Thus, just showing either of these combinations is enough, and thus FIG. 4 shows an example in which the combination of G2 and G4 corresponds to an index value 13, but this may be interpreted as the combination of G2 and G5.

Note that numbers such as "23," "20," and "17" of the present disclosure are values with output power of a power class 3 UE in mind, and the values are not limited to these. "23" may be interpreted as a first power value (for example, maximum output power of a UE in a certain power class), and "20" may be interpreted as a second power value (for example, a value obtained by the maximum output power - 3 [dBm]). "17" may be interpreted as a third power value (for example, a value obtained by the second power value - 3 [dBm]).

### {PA Architecture Corresponding to Group or Combination of Groups To Be Reported}

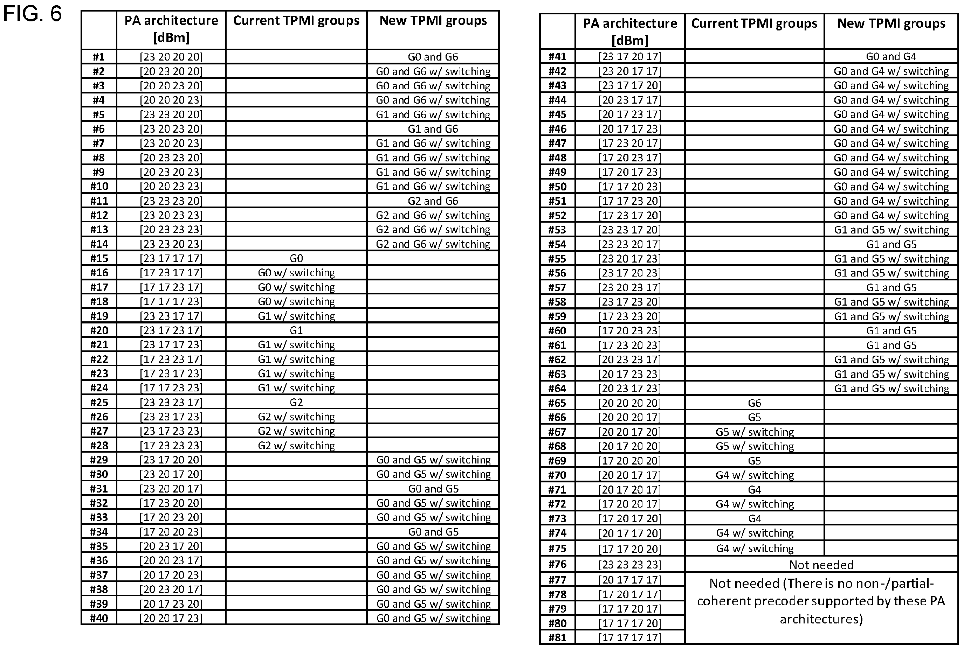

FIG. 6 is a diagram to show an example of a PA architecture corresponding to a group or combination of groups to be reported in the first embodiment. In consideration of all of UE capability 1 to UE capability 3, the present example shows an example of a structure in a case where each PA corresponding to 4 transmission ports can take three output power values (23 dBm, 20 dBm, and 17 dBm).

The column on the far left is indices for convenience for associating PA architectures with TPMI groups. In the present example, three output power values exist for four PAs, and thus index values capable of being taken are 3⁴ = 81 different values.

Indices #1 to #64 correspond to PA architectures with UE capability 3 including one to three pieces of 23 dBm. Indices #65 to #75 correspond to PA architectures with UE capability 2 not including 23 dBm. Index #76 corresponds to a PA architecture with UE capability 1 including only 23 dBm. Indices #77 to #81 correspond to PA architectures incapable of performing full power transmission with a non-coherent or partial coherent precoder.

Mode 2 required to report a TPMI group corresponds to UE capability 2 or UE capability 3. Thus, the UE may assume that there is no need to report TPMI groups to indicate PA architectures corresponding to indices #76 to #81 of FIG. 6.

A "PA architecture" column of FIG. 6 shows PA architectures. The PA architecture may show PA output power corresponding to port 0, port 1, port 2, and port 3 from left to right. Note that the UE may interpret an association between the PA architecture and antenna ports in inverse order. For example, the UE may interpret [20 20 20 23] as [23 20 20 20] read from right to left. In other words, a certain PA architecture is equivalent to the architecture in which switching between port 1 and port 4 is performed and switching between port 2 and port 3 is performed.

A "Current TPMI groups" column of FIG. 6 shows groups capable of indicating a PA architecture as an individual group, such as shown in FIG. 3B. A PA architecture with "GX w/ switching" means that switching an arbitrary port in a PA architecture for group GX (X is an integer) indicates the PA architecture.

For example, switching between port #0 and port #1 in PA architecture ([23 17 17 17] with #15) for group G0 can achieve PA architecture [17 23 17 17] with #16.

A "New TPMI groups" column of FIG. 6 shows groups capable of indicating a PA architecture with a combination of a plurality of groups as shown in FIG. 5. A PA architecture with "GX and GY w/ switching" means that switching an arbitrary port in a PA architecture for a combination of group GX and group GY (X and Y are integers) indicates the PA architecture.

As shown in FIG. 6, for the partial coherent UE with 4 transmission antenna ports, it is unnecessary for a PA architecture with UE capability 3 to be able to express all (combinations of) groups of FIG. 4 indicated by 4 bits. For example, a TPMI group corresponding to the PA architecture with UE capability 3 can be expressed without use of individual G3, G4, G5, and G6.

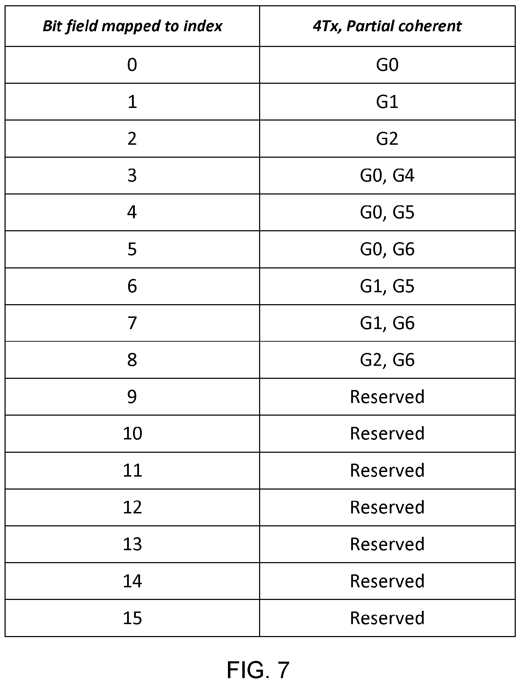

Thus, the UE may assume that bit values corresponding to unused groups out of groups of FIG. 4 indicate "Reserved" or another used group. FIG. 7 is a diagram to show another example of the TPMI group indicated by the TPMI group capability information in the first embodiment. In correspondence of the present example, G3 to G6, {G1, G4}, {G2, G4}, and {G2, G5} of FIG. 4 are removed, and the number of indices indicating "Reserved" increases to 7. Some of these may be removed. The UE with UE capability 3 may assume that groups corresponding to only UE capability 2 are not reported (in other words, only groups corresponding to UE capability 3 are reported), as shown in FIG. 7.

Note that in the present disclosure, the indices indicating "Reserved" may indicate another group or combination of groups not described in the drawings, or may indicate at least one of a group (or combination of groups) capable of performing transmission at certain power, a group (or combination of groups) capable of performing transmission of a certain type, and the like. The indices indicating "Reserved" may be used for indicating information other than groups (for example, information indicating between which ports antenna switching is possible) in addition to or in place of information about the groups.

The correspondence of FIG. 7 may be modified so that at least one of G3 to G6 can be designated for the UE with UE capability 2.

According to the first embodiment described above, the UE can perform judgment, report, and the like on detailed information about PA architectures by using the TPMI group capability information.

### <Second Embodiment>

Similarly to the first embodiment, a second embodiment relates to TPMI group capability information for a partial coherent UE that supports mode 2 and that has 4 transmission antenna ports (4Tx). Description of the same point as the first embodiment will not be repeated.

The UE of the second embodiment can perform antenna port switching only between port pairs included in coherent port pairs. For example, the UE can switch port 0 to only port 0 and port 2 constituting the same coherent port pair, and cannot switch port 0 to port 1 and port 3 belonging to a different coherent port pair. The UE may report capability information indicating that antenna port switching between the port pairs included in the coherent port pairs is supported to a network.

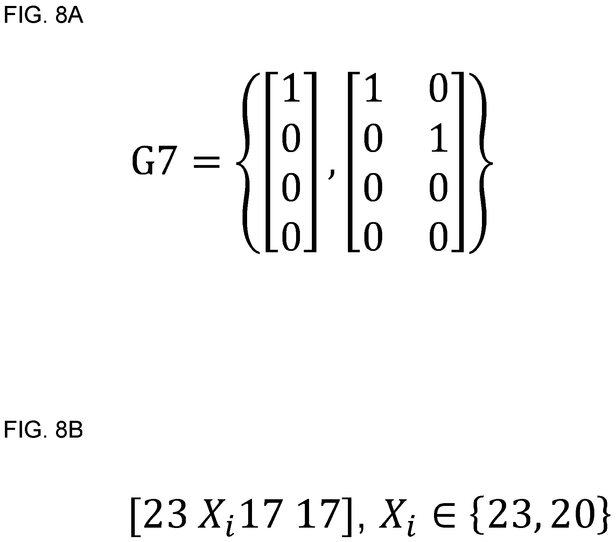

Assuming the antenna port switching of the second embodiment, it is preferable that a new group (referred to as G7) different from G0 to G6 is defined as a TPMI group. FIGS. 8A and 8B are diagrams to show an example of a port and PA architecture that is related to G7 and is capable of performing full power transmission.

FIG. 8A shows a precoding matrix (port capable of performing full power transmission) for each rank corresponding to G7 in a case where the number of transmission antenna ports is 4. G7 may correspond to a TPMI group for UL full power transmission in rank 1 and rank 2. FIG. 8A shows a case that the UE to support G7 can perform full power transmission in rank 1 with only port 0 and a case that the UE can perform full power transmission in rank 2 by using port 1 and port 2.

FIG. 8B shows a PA architecture corresponding to G7. As can be seen from FIG. 8A, as output power of each PA, 23 dBm for port 0, X*ᵢ* (X*ᵢ* = 23 or 20) dBm for port 1, and 17 dBm for port 2 and port 3 may be indicated.

The UE may assume that the TPMI group capability information indicates any one of G0 to G7 or a combination of these. Note that the UE may assume that G7 is not combined with another group (for example, a combination of groups corresponding to {G0, G7} is not reported).

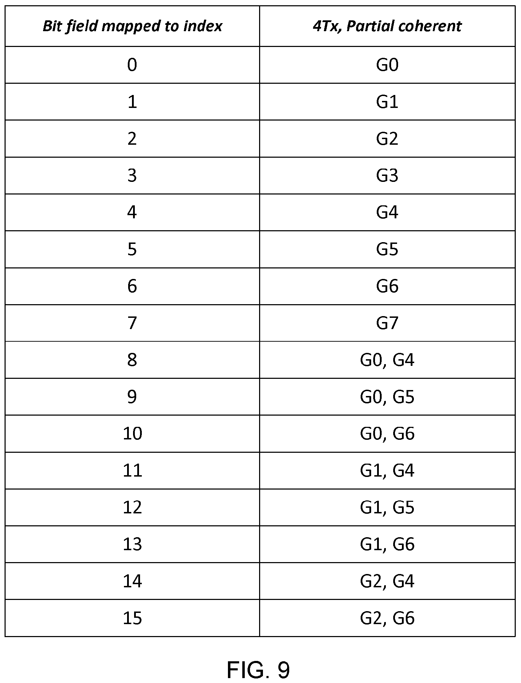

FIG. 9 is a diagram to show an example of a TPMI group indicated by the TPMI group capability information in the second embodiment.

In FIG. 9, bit field values 0 to 7 each corresponds to one group (G0 to G7). On the other hand, bit field values 7 to 15 each corresponds to a combination of two groups.

### {PA Architecture Corresponding to Group or Combination of Groups To Be Reported}

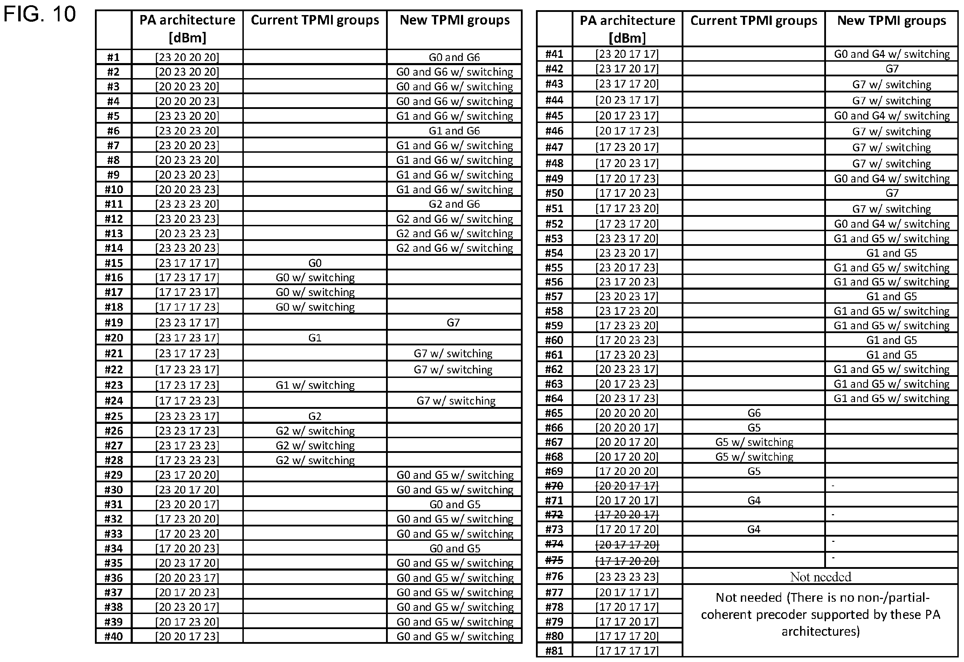

FIG. 10 is a diagram to show an example of a PA architecture corresponding to a group or combination of groups to be reported in the second embodiment. Description of respective columns is similar to that of FIG. 6. Overlapping description of the same point as description described in FIG. 6 will not be repeated.

FIG. 10 corresponds to a consequence of replacement of G1, {G0, G4}, and the like of FIG. 6 with G7 by introduction of group G7. According to correspondence of the present example, the correspondence has an advantage in that identification of a PA architecture corresponding to groups reported by the UE is easier, such as reduction in the number of indices corresponding to {G0, G4}, which are present in large amounts in FIG. 6. For example, a base station can suitably perform scheduling for the UE by assuming a PA architecture corresponding to reported TPMI groups.

Note that with respect to indices #70, #72, 74, and #75, PA architectures are crossed out with lines, and corresponding groups are not shown. Since only antenna port switching between port pairs included in the coherent port pairs is supported in the second embodiment, this corresponds to removal of PA architectures incapable of performing full power transmission (incapable of outputting 23 dBm with only a PA for ports in the coherent port pairs) from a reported target.

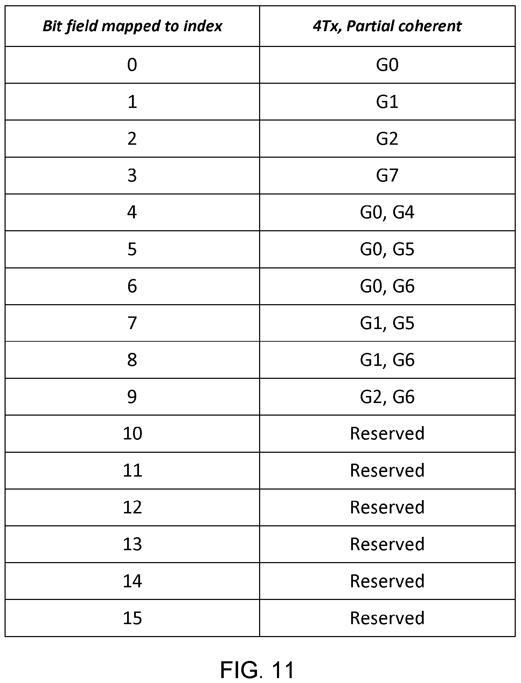

The UE may assume that bit values corresponding to unused groups out of groups of FIG. 9 indicate "Reserved" or another used group. FIG. 11 is a diagram to show another example of the TPMI group indicated by the TPMI group capability information in the second embodiment. In correspondence of the present example, G3 to G6, {G1, G4}, {G2, G4}, and {G2, G5} of FIG. 4 are removed, and indices indicating "Reserved" are increased to 6. Note that some of these may be removed. The UE with UE capability 3 may assume that groups corresponding to only UE capability 2 are not reported, as shown in FIG. 11.

The correspondence of FIG. 11 may be modified so that at least one of G3 to G6 can be designated for the UE with UE capability 2.

According to the second embodiment described above, the UE can perform judgment, report, and the like on detailed information about PA architectures by using the TPMI group capability information.

### <Others>

In the above-mentioned respective embodiments, UL transmission using an antenna port is described under assumption of a PUSCH, but full power transmission of at least one of another signal and channel may be controlled in addition to the PUSCH or in place of the PUSCH.

In other words, the antenna port in the above-mentioned respective embodiments may be an antenna port for at least one of a PUSCH (and a demodulation reference signal (DMRS) for the PUSCH), a phase tracking reference signal (PTRS), an uplink control channel (Physical Uplink Control Channel (PUCCH)), a random access channel (Physical Random Access Channel (PRACH)), an SRS, and the like, and the full power transmission may be applied to at least one of these signals and channels.

The UE may judge which TPMI group capability information in the first embodiment and second embodiment is used depending on whether to have a capability to support antenna port switching between arbitrary port pairs (or whether to report information about the capability) (for example, the first embodiment when reported).

The UE may judge which TPMI group capability information in the first embodiment and second embodiment is used depending on whether to have a capability to support antenna port switching between port pairs included in coherent port pairs (or whether to report information about the capability) (for example, the second embodiment when reported).

Note that according to the above-mentioned first embodiment, second embodiment, and the like, with respect to a partial coherent UE with 4 transmission antenna ports that has UE capability 3 and that operates in mode 2, it is possible to identify all TPMI groups for achieving UL full power transmission. With respect to a partial coherent UE with 4 transmission antenna ports that has UE capability 3 and that operates in mode 2, it is possible to identify only TPMI groups necessary for achieving UL full power transmission. It is possible to identify TPMI groups for achieving UL full power transmission in rank 1, rank 2, rank 3, and rank 4.

TPMI group information may correspond to information indicating a port capable of performing full power transmission in only a certain rank (for example, rank 1, rank 2, rank 3, or rank 4). In this case, the UE and base station may identify, on the basis of the TPMI group information, a port capable of performing full power transmission in a higher rank. For example, as shown in FIG. 3A, when G3 to indicate architectures corresponding to rank 2 (matrix with 4 rows and 2 columns) is defined, the UE and base station may judge that the UE to report G3 can perform full power transmission in rank 3 (matrix with 4 rows and 3 columns) by using port 0, port 1, and port 2 capable of performing full power transmission indicated by these architectures.

The UE and base station may determine, on the basis of non-coherent TPMI groups (G0 to G3) for a lower rank (for example, rank 2), UL full power transmission to support non-coherent or partial coherent TPMI groups for a higher rank (for example, rank 3).

The UE and base station may determine, on the basis of non-coherent TPMI groups for rank 1, UL full power transmission to support partial coherent TPMI groups.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

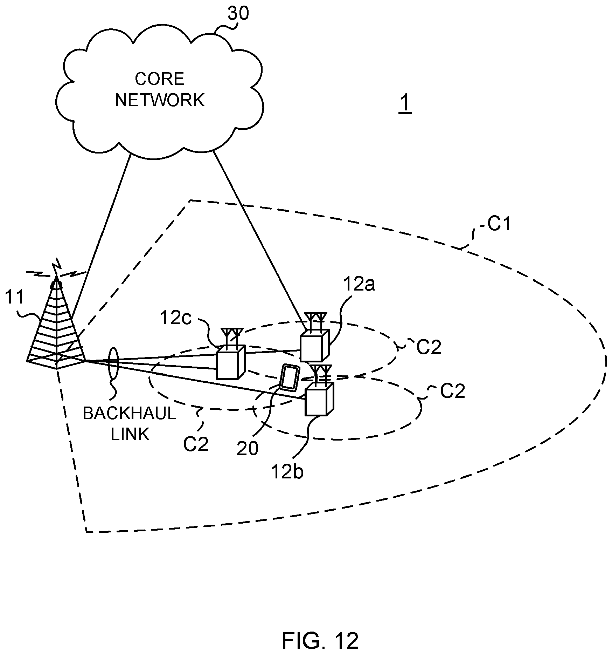

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UEspecific Reference Signal)."

### (Base Station)

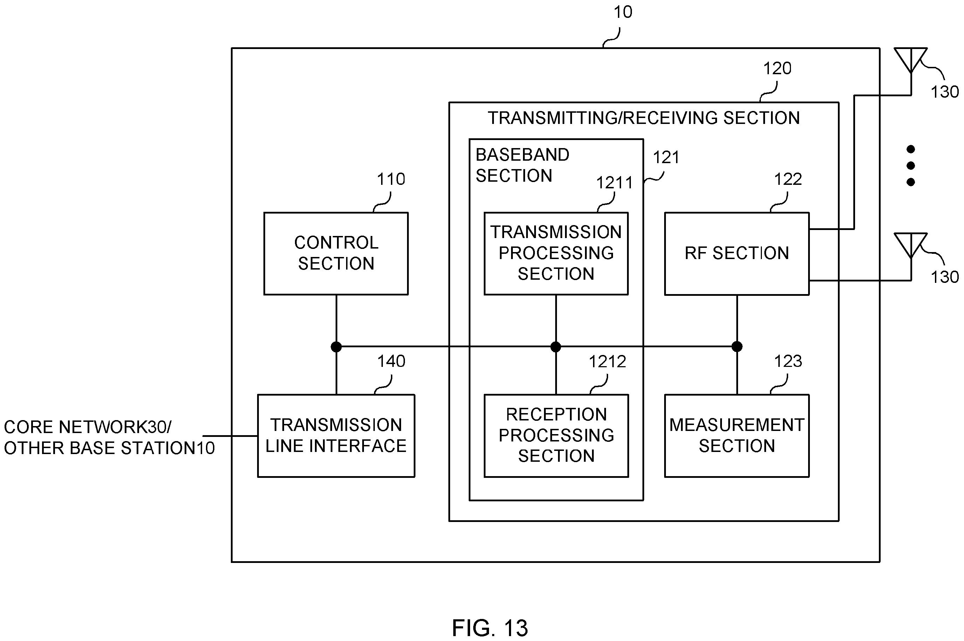

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive, from the user terminal 20, at least one of capability information indicating a mode (for example, mode 1 or mode 2) for full power transmission to be supported and capability information (TPMI group capability information) indicating a transmitted precoding matrix indicator (TPMI) group to support full power transmission.

The control section 110 may judge, on the basis of whether the user terminal 20 supports antenna port switching between arbitrary antenna port pairs, correspondence between a bit (bit value) of the TPMI group capability information and a TPMI group (or combination of groups).

The transmitting/receiving section 120 may receive the TPMI group capability information corresponding to a TPMI group to support full power transmission transmitted from the user terminal 20 on the basis of the correspondence.

### (User Terminal)

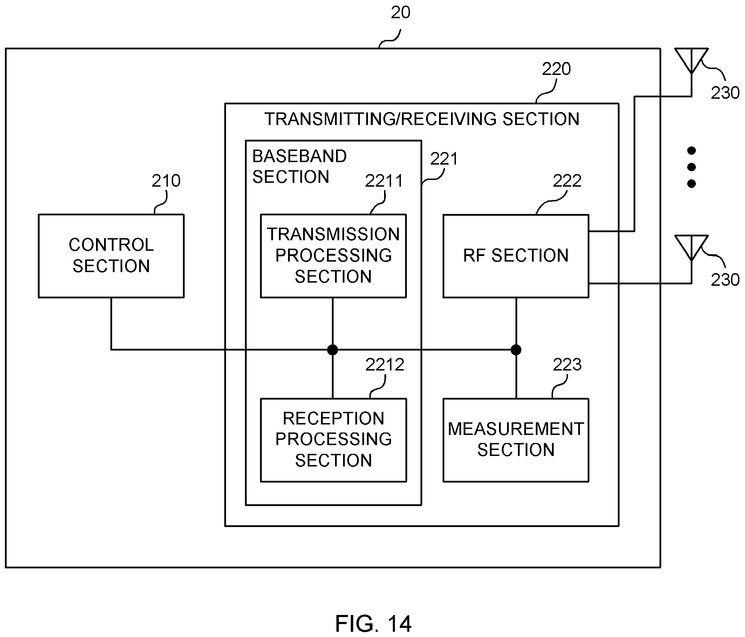

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting section (transmitting/receiving section 220) may transmit mode 2 capability information indicating that mode 2 for full power transmission is supported. Note that the mode 2 capability information may be interpreted as mode 1 and mode 2 capability information indicating that mode 1 and mode 2 are supported, or may be interpreted as mode 0 capability information indicating that mode 0 (UE capability 1) is supported.

The control section 210 may judge, on the basis of whether to support antenna port switching between arbitrary antenna port pairs, correspondence (for example, a table of FIG. 4, FIG. 7, FIG. 9, or FIG. 11) between a bit (bit value) of transmitted precoding matrix indicator (TPMI) group capability information and a TPMI group (and/or combination of groups).

The control section 210 may identify, on the basis of whether to support antenna port switching between arbitrary antenna port pairs, a TPMI group corresponding to its own PA architecture by referring to, for example, a table of FIG. 6 or FIG. 10.

Note that the control section 210 may not store or use these tables. As long as the control section 210 can judge correspondence shown in these tables, the control section 210 may perform the above-described processing in an arbitrary manner.

The transmitting section (transmitting/receiving section 220) may transmit, on the basis of the correspondence, the TPMI group capability information corresponding to a TPMI group to support full power transmission.

The control section 210 may assume that the correspondence includes only a TPMI group related to user terminal capability 3 related to full power transmission.

The control section 210 may assume that the correspondence includes a TPMI group (for example, group 7) indicating that full power transmission can be performed in rank 1 with only port 0 and that full power transmission can be performed in rank 2 with use of port 1 and port 2.

When mode 2 is configured, the transmitting section (transmitting/receiving section 220) may transmit an uplink shared channel (PUSCH) at full power by using a precoder based on a TPMI designated by DCI or the like.

When transmitting the mode 2 capability information and the TPMI group capability information, the transmitting section (transmitting/receiving section 220) may transmit information indicating a combination of TPMI groups as the TPMI group capability information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

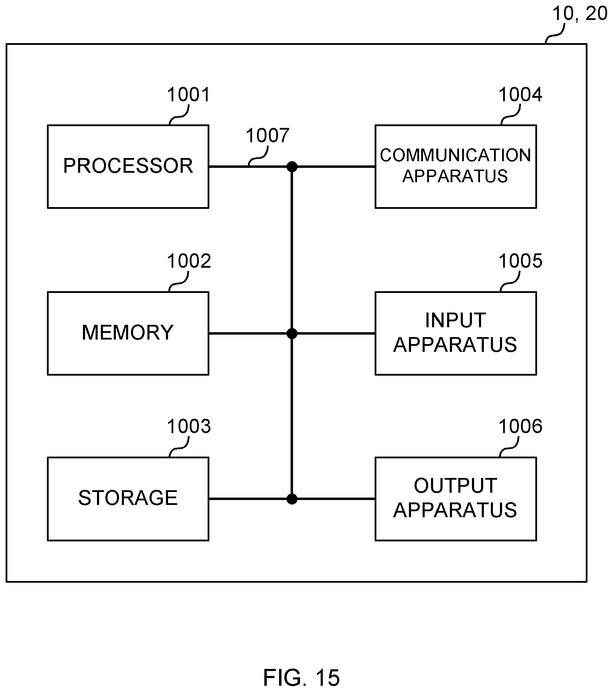

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that judges, on the basis of whether to support antenna port switching between arbitrary antenna port pairs, correspondence between a bit of transmitted precoding matrix indicator (TPMI) group capability information and a TPMI group; and
a transmitting section that transmits, on the basis of the correspondence, the TPMI group capability information corresponding to a TPMI group to support full power transmission.

2. The terminal according to claim 1, wherein
the control section assumes that the correspondence includes only a TPMI group related to user terminal capability 3 related to full power transmission.

3. The terminal according to claim 1 or 2, wherein
the control section assumes that the correspondence includes a TPMI group indicating that full power transmission can be performed in rank 1 with only port 0 and that full power transmission can be performed in rank 2 with use of port 1 and port 2.

4. A radio communication method for a terminal comprising:
judging, on the basis of whether to support antenna port switching between arbitrary antenna port pairs, correspondence between a bit of transmitted precoding matrix indicator (TPMI) group capability information and a TPMI group; and
transmitting, on the basis of the correspondence, the TPMI group capability information corresponding to a TPMI group to support full power transmission.

5. A base station comprising:
a control section that judges, on the basis of whether a terminal supports antenna port switching between arbitrary antenna port pairs, correspondence between a bit of transmitted precoding matrix indicator (TPMI) group capability information and a TPMI group; and
a receiving section that receives the TPMI group capability information corresponding to a TPMI group to support full power transmission transmitted from the terminal on the basis of the correspondence.
